# EUROPÄISCHE PATENTANMELDUNG

(11) **EP 1 145 932 A2**
(43) Veröffentlichungstag der Anmeldung: **17.10.2001**
(21) Anmeldenummer: 01108908.3
(22) Anmeldetag: 10.04.2001
(51) Int. Cl.: B62B 3/14, G09F 27/00

(54) **Verfahren zum Versorgen von Kunden eines SB-Marktes mit produktspezifischen Informationen**

(30) Priorität: 10.04.2000 DE 10017166
(71) Anmelder: Super Market Media AG, 82178 Puchheim (DE)
(72) Erfinder: Sonnendorfer, Horst, 82178 Puchheim (DE); Wieth, Franz, 82178 Puchheim (DE)
(74) Vertreter: von Kirschbaum, Albrecht, Dipl.-Ing.

(57) **Zusammenfassung**

Zum Versorgen von Kunden eines SB-Marktes mit produktspezifischen Informationen werden im Eingangsbereich des SB-Marktes von der/ den dort vorgesehenen Sendeeinrichtung/en (1) eine Anzahl produktspezifischer Informationen mit Kennungscodes von bei den entsprechenden Produkten vorgesehenen elektronischen Preisauszeichnungseinrichtungen (4) an Empfangs-/Sendeeinrichtungen (2) von Kunden mitgeführter Einkaufswagen (3) übertragen und dort gespeichert. Nach Befördern von Einkaufswagen (3) in den Bereich von elektronischen Preisauszeichnungseinrichtungen (4), deren Kennungscode einer der gespeicherten, produktspezifischen Informationen zugeordnet ist, wird diese produktspezifische Information von der jeweiligen Preisauszeichnungseinrichtung (4) jeweils in der Empfangs-/Sendeeinrichtung der in den Bereich dieser Preisauszeichnungseinrichtung gebrachten Einkaufswagen (3) aktiviert und mittels deren Informationseinrichtung dem Kunden zur Kenntnis gebracht.

Während der Wiedergabe einer produktspezifischen Information mittels der Informationseinrichtung des mitgeführten Einkaufswagens (3) kann eine unmittelbar an oder bei dem entsprechenden Produkt oder in dessen Nähe angeordnete, einen optischen und/oder akustischen Hinweis abgebende Hinweiseinrichtung (12; 12') ausgelöst werden.

## Beschreibung

Die Erfindung betrifft ein Verfabren zum Versorgen von Kunden eines SB-Marktes mit produktspezifishen Informationen.

In EP 0 254 170 B1 sowie EP 0 435 225 B1 sind derartige Verfahren sowie Einrichtungen zu deren Durchführung beschrieben. Hierbei sind dezentral in Abteilungen eines SB-Marktes bzw. bei Produktgruppen jeweils Sende-/Empfangseinrichtungen vorgesehen. An Einkaufswagen des SB-Markts sind Empfangs/Sendeeinheiten mit jeweils einer akustischen Informationseinrichtung (EP 0 254 170 B1) in Form eines Lautsprechers und/oder mit einer optischen Informationseinrichtung (EP 0 435 225 B1) in Form einer Anzeigeeinrichtung beispielsweise eines Displays vorgesehen. Die Übertragung von Informationen und Daten zwischen den dezentralen Sende-/Empfangseinrichtungen und den Empfangs-/Sendeeinrichtungen der von Kunden mitgeführten Einkaufswagen erfolgt jeweils drahtlos, beispielsweise mittels Funkwellen, Infrarotstrahlen u.ä..

In dem SB-Markt bzw. dessen Abteilungen sind mehr oder weniger umfangreiche Produktgruppen untergebracht. Die dort vorgesehenen Sende-/Empfangseinrichtungen müssen daher beispielsweise bei einer Übertragung mittels Infrarot in einem solchen Abstand voneinander angeordnet sein, daß sich die Infrarot-Übertragungsstrecken nicht gegenseitig beeinflussen. Wenn Kunden über die Informationseinrichtung des mitgeführten Einkaufswagens eine Information übermittelt worden ist, die sich auf ein ganz bestimmtes Produkt bezieht, ist es für Kunden häufig schwierig, die über die Informationseinrichtung erhaltene Information problemlos und schnell dem Produkt zuzuordnen, auf welches sich die gerade übermittelte Information bezieht.

Zum Auszeichnen von Produkten sind in SB-Märkten häufig Preisauszeichnungseinrichtungen in Form von elektronischen Preisauszeichnungsschildern, sogenannten Electronic Shelf Labels (ESL) an den Regalen vorgesehen. Dadurch können im allgemeinen von einer zentralen Stelle Preisauszeichnungen bei den entsprechenden Produkten vorgenommen und ohne nennenswerten Zeit- und Arbeitsaufwand geändert werden.

Aufgabe der vorliegenden Erfindung ist es, in einem SB-Markt Einkaufswagen mitführende Kunden mit ein oder mehrere Produkte einer Produktgruppe betreffenden Informationen, sogenannten produktspezifischen Informationen zu versorgen und gegebenenfalls gleichzeitig auf ein derart beworbenes Produkt hinzuweisen. Ferner soll auch eine korrekt erfolgte Übermittlung einer produktspezifischen Information festgehalten werden können.

Gemäß der Erfindung ist diese Aufgabe durch die Merkmale des Anspruchs 1 gelöst. Vorteilhafte Weiterbildungen der Erfindung sind Gegenstand von auf Anspruch 1 unmittelbar oder mittelbar rückbezogenen Ansprüchen.

Unter den in Frage kommenden SB-Märkten werden im folgenden solche verstanden, bei welchen nur in deren Eingangsbereich mindestens eine von einer zentralen Datenverarbeitungseinrichtung mit Daten und Informationen versorgte Sendeeinrichtung, eine größere Anzahl Einkaufswagen mit Empfangs-/Sendeeinrichtungen mit jeweils einer Informationseinrichtung und bei den angebotenen Produkten angeordnete elektronische Preisauszeichnungseinrichtungen mit jeweils einer Sende/Empfangseinheit vorgesehen sind. Ferner findet die Kommunikation zwischen den verschiedenen Einrichtungen vorzugsweise drahtlos, beispielsweise über Funkwellen, Infrarotstrahlen u.ä. statt.

Gemäß der Erfindung werden lediglich im Eingangsbereich eines SB-Marktes von der mindestens einen Sendeeinrichtung eine Anzahl produktspezifischer Informationen mit Kennungscodes der bei den entsprechenden Produkten vorgesehenen elektronischen Preisauszeichnungseinrichtungen an die Empfangs-/Sendeeinrichtungen der von Kunden mitgeführten Einkaufswagen übertragen und dort gespeichert. Wenn ein Kunde mit einem Einkaufswagen bei seinem Weg durch den Einkaufsmarkt in den Bereich einer elektronischen Preisauszeichnungseinrichtung kommt, deren Kennungscode einer der gespeicherten, produktspezifischen Informationen zugeordnet ist, wird mittels dieses Kennungscodes die spezielle produktspezifische Information von der Sende-/Empfangseinheit dieser Preisauszeichnungseinrichtung in der Empfangs-/Sendeeinrichtung des mitgeführten Einkaufswagens aktiviert. Dem Kunden wird die ein ganz bestimmtes Produkt bewerbende, produktspezifische Information mittels der Informationseinrichtung des mitgeführten Einkaufswagens, beispielsweise in Form eines Displays zur Kenntnis gebracht. Gegebenenfalls kann es auch angebracht sein, die aktivierte produktspezifische Information nur oder zusätzlich auch akustisch dem Kunden zur Kenntnis zu bringen.

Im Unterschied zu dem aus dem Stand der Technik bekannten Verfahren, bei welchem in den Abteilungen bzw. bei Produktgruppen eines SB-Marktes dezentral zahlreiche Sende-/Empfangseinrichtungen vorgesehen sein müssen, ist gemäß der Erfindung in vorteilhafter Weise nur im Eingangsbereich eines SB-Marktes mindestens eine Sendeeinrichtung vorgesehen.

Während die produktspezifische Information mittels der Informationseinrichtung des mitgeführten Einkaufswagens wiedergegeben wird, kann es gemäß einer bevorzugten Weiterbildung der Erfindung vorteilhaft und zweckmäßig sein, unmittelbar an oder bei dem beworbenen Produkt, auf jeden Fall sehr nahe bei diesem Produkt, mittels einer Hinweiseinrichtung vorzugsweise einen optischen, gegebenenfalls auch einen akustischen Hinweis auf das beworbene Produkt zu geben. Beispielsweise kann durch die ausgelöste Hinweiseinrichtung ein Blinken der an oder unmittelbar bei dem beworbenen Produkt vorgesehenen Preisauszeichnungseinrichtung erzeugt bzw. angeregt werden. Genauso ist beispielsweise als Hinweis auch ein eine bestimmte Zeit andauerndes kontinuierliches Aufleuchten der entsprechenden Preisauszeichnungseinrichtung möglich.

Gleichzeitig mit der Aktivierung der Empfangs-/Sendeeinrichtung des mitgeführten Einkaufswagens kann die Hinweiseinrichtung von der Sende-/Empfangseinheit der entsprechenden elektronischen Preisauszeichnungseinrichtung oder aber auch von der aktivierten Empfangs- und Sendeeinrichtung des Einkaufswagens ausgelöst werden. Die Hinweiseinrichtungen können beispielsweise auch in den elektronischen Preisauszeichnungseinrichtungen integriert sein.

Somit erhält ein Kunde optisch und/oder gegebenenfalls auch akustisch nicht nur eine spezifische Information zu einem bestimmten Produkt, sondern zusätzlich auch unmittelbar bei dem beworbenen Produkt einen deutlichen, optischen und/oder gegebenenfalls auch akustischen Hinweis auf dieses Produkt. Auf diese Weise wird den Kunden bei einer großen Anzahl von Produkten mit ähnlicher und damit u.U. leicht verwechselbarer Ausstattung das Auffinden des beworbenen Produkts erleichtert, da das von Kunden oft als lästig empfundene Suchen nach dem beworbenen Produkt entfällt.

Ferner kann in vorteilhafter Weise eine erfolgte optische und/oder akustische Wiedergabe mittels der Informationseinrichtung der vom Kunden mitgeführten Einkaufswagen in dessen Empfangs-/Sendeeinrichtung registriert werden. Jedoch kann auch von der Empfangs-/Sendeeinrichtung des mitgeführten Einkaufswagens gegenüber der Sende-/Empfangseinheit der dem entsprechenden Produkt zugeordneten Preisauszeichnungseinrichtung eine einwandfreie Wiedergabe der produktspezifischen Information bestätigt und dann in dieser Preisauszeichnungseinrichtung registriert werden. Derartige Registrierungen stellen dann jeweils gleichzeitig auch eine Quittierung einer erfolgreichen Übertragung einer produktspezifischen Information dar.

Auf diese Weise können sowohl Betreiber des SB-Marktes als auch Hersteller anhand der in den Einkaufswagen-Empfangs/Sendeeinrichtungen und/oder in den Sende-/Empfangseinheiten der entsprechenden Preisauszeichnungseinrichtungen gespeicherten Quittierungen feststellen, wie oft das Produkt nicht nur beworben, sondern wie oft auch optisch und/oder akustisch auf das beworbene Produkt hingewiesen worden ist.

Von SB-Märkten werden Kunden, um sie in gewissem Umfang an den SB-Markt zu binden, häufig Kunden-Servicekarten angeboten mit dem Hinweis, daß beispielsweis dem Inhaber einer solchen Kunden-Servicekarte bei allen oder auch nur bei bestimmten Gruppen von Produkten ein Preisnachlaß eingeräumt wird oder daß beispielsweise bei Erreichen einer bestimmten Summe u.U. in einem vorgegebenen Zeitraum nachträglich ein bestimmter Betrag gutgeschrieben bzw. ausgezahlt wird.

In einer solchen Kunden-Servicekarte können beispielsweise an der Kasse jeweils die vom Kunden eingekauften Produkte festgehalten werden. Durch einen Vergleich der über einen bestimmten Zeitraum von dem Servicekarteninhaber eingekauften Produkte kann dann auf verhältnismäßig einfache Weise ein sogenanntes individuelles Kundenprofil erstellt und dem Servicekarteninhaber zugeordnet werden. Anhand der Kaufgewohnheiten können dann beispielsweise männliche von weiblichen Singles und diese wiederum von Personen mit ein oder mehreren Kindern unterschieden werden.

Um Inhabern von solchen Servicekarten die Übermittlung von Informationen zu ersparen, die sich auf Produkte beziehen, für welche sich der jeweilige Kunde aufgrund des im SB-Markt vorliegenden Kundenprofils mit sehr hoher Wahrscheinlichkeit nicht interessiert, werden solchen Kunden, nachdem sie sich anhand ihrer Kunden-Servicekarte identifiziert haben, im Eingangsbereich des SB-Marktes nur die produktspezifischen Informationen übermittelt, die zu ihrem individuellen Kundenprofil passen, und in der Empfangs-/Sendeeinrichtung des mitgeführten Einkaufswagens gespeichert.

Beispielsweise werden dann einem/r Single keine Informationen zur Kenntnis gebracht, die beispielsweise Babynahrung, Kinderbekleidung, Spielzeug, u.ä. betreffen. Inhabern von Kunden-Servicekarten werden somit keine Informationen zugemutet, bei denen der Marktbetreiber mit hoher Wahrscheinlichkeit davon ausgehen kann, daß dieser Kunde an solchen Informationen nicht nur kein Interesse hat, sondern sich darüber hinaus durch die Übertragung solcher Informationen sogar belästigt fühlen kann.

In vorteilhafter Weise können gemäß der Erfindung vor dem Verlassen des SB-Marktes, zweckmäßigerweise im Kassenbereich die geraade eingekauften Produkte erfaßt, an die zentrale Datenverarbeitungseinrichtung übermittelt und hinsichtlich des jeweiligen individuellen Kundenprofils analysiert werden. Sobald Abweichungen von dem bisher erstellten Kundenprofil festgestellt werden, kann dann ohne nennenswerten Aufwand das Kundenprofil entsprechend geändert, ergänzt und damit aktualisiert werden.

Nachfolgend wird die Erfindung anhand der Zeichnungen näher erläutert. Es zeigen:
- Fig.1: eine schematische Darstellung eines Eingangsbereichs eines SB-Marktes und eines schematisch angedeuteten Einkaufswagens, und
- Fig.2: eine schematische Darstellung desselben Einkaufswagens vor einer schematisch angeordneten Produktgruppe.

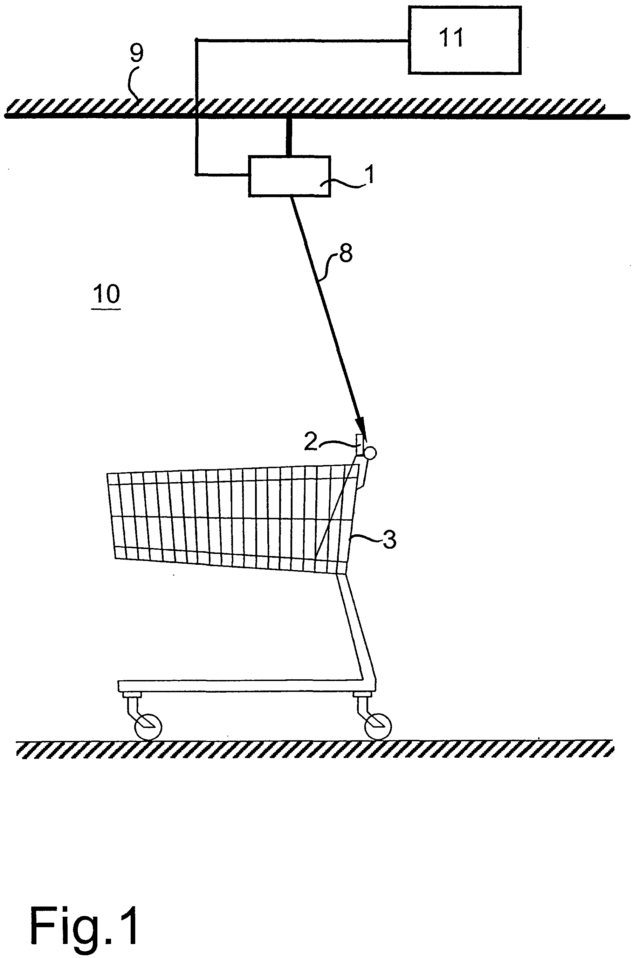

In Fig.1 ist nur im Eingangsbereich 10 eines im einzelnen nicht näher dargestellten SB-Marktes mindestens eine, beispielsweise an einer Decke bzw. Zwischendecke 9 des SB-Marktes vorgesehene Sendeeinrichtung 1 schematisch wiedergegeben, die von einer zentralen Datenverarbeitungseinrichtung 11 mit Daten und Informationen versorgt wird.

Unter der Sendeeinrichtung 1 befindet sich ein Einkaufswagen 3, an dessen durch einen Kreis angedeuteten Schiebegriff eine Empfangs-/Sendeeinrichtung 2 mit einer nicht näher dargestellten Informationseinrichtung vorgesehen ist. Beispielsweise kann die Informationseinrichtung ein Display oder eine entsprechende optische Wiedergabeeinrichtung sein. Alternativ oder zusätzlich kann als Informationseinrichtung auch ein nicht näher dargestellter Lautsprecher der Empfangs-/Sendeeinrichtung zugeordnet sein.

Durch einen ausgezogen wiedergegebenen Pfeil 8 ist eine Übertragungsstrecke von der im Eingangsbereich angeordneten Sendeeinrichtung 1 zu der in deren Bereich gebrachten Empfangs-/Sendeeinrichtung 2 eines Einkaufswagens 3 angedeutet. Hierbei erfolgt die Übertragung drahtlos, beispielsweise über entsprechend modulierte Infrarotstrahlen. Selbstverständlich kann die Übertragung auch mittels elektromagnetischer Wellen erfolgen.

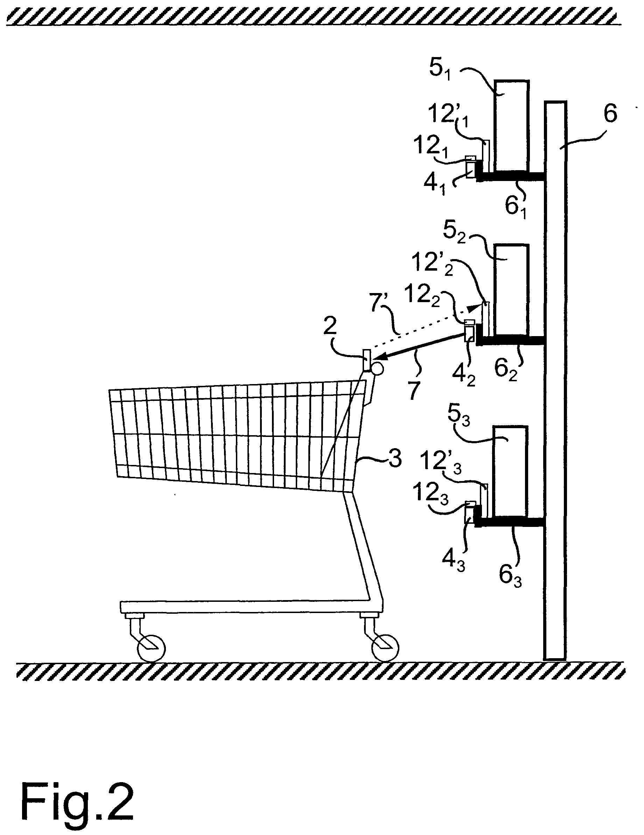

In der schematischen Darstellung der Fig.2 ist der Einkaufswagen 3 von einem nicht dargestellten Kunden in den Bereich einer durch mehrere Produkte 5₁ bis 5₃ angedeuteten Produktgruppe befördert worden. Die Produkte 5₁ bis 5₃ sind auf drei schematisch angedeuteten Regalbrettern 6₁ bis 6₃ eines Regals 6 untergebracht. In der Fig.2 sind beispielsweise am vorderen Rand der Regalbretter 6₁ bis 6₃ vor den jeweiligen Produkten 5₁ bis 5₃ schematisch angedeutete Preisauszeichnungseinrichtungen in Form von elektronischen Preisauszeichnungsschildern 4₁ bis 4₃ vorgesehen. Den Preisauszeichnungseinrichtungen 4₁ bis 4₃ sind in Fig.2 nicht näher dargestellte Sende-/Empfangs-einheiten zugeordnet, die in regelmäßigen Intervallen den Kennungscode der jeweiligen Preisauszeichnungseinrichtung aussenden.

Am vorderen Rand der einzelnen Regalbretter 6₁ bis 6₃ können unmittelbar vor oder bei den verschiedenen Produkten 51 bis 5₃ Hinweiseinrichtungen 12'₁ bis 12'₃ angeordnet sein. Alternativ hierzu können auch Hinweiseinrichtungen 12₁ bis 12₃ unmittelbar an oder bei den Preisauszeichnungsschildern 4₁ bis 4₃ vorgesehen sein bzw. auch in den Preisauszeichnungsschildern 4₁ bis 4₃ integriert sein.

Wie eingangs beschrieben, werden nur im Eingangsbereich 10 über die Übertragungsstrecke 8, beispielsweise in Form einer modulierten Infrarotstrahlung, zum Bewerben bestimmter Produkte eine Anzahl diese Produkte betreffende Informationen, sogenannte produktspezifische Informationen übertragen. Diesen produktspezifischen Informationen ist jeweils ein Kennungscode der bei den zu bewerbenden Produkten vorgesehenen, elektronischen Preisauszeichnungseinrichtungen 4 zugeordnet, vorzugsweise vorangestellt.

Sobald der Einkaufswagen 3, in dessen Empfangs-/Sendeeinrichtung 2 alle produktspezifischen Informationen der zu bewerbenden Produkte gespeichert sind, von einem Kunden in den Bereich bzw. in die Nähe eines Preisauszeichnungsschildes 4, beispielsweise des Schildes 4₂ befördert worden ist, das bei oder unmittelbar vor dem zu bewerbenden Produkt 5₂ angeordnet ist, wird die am Einkaufswagen 3 angebrachte Empfangs-/Sendeeinrichtung 2 von der Sende-/Empfangseinheit des Preisauszeichnungsschildes 4₂ angetriggert, wodurch dessen Kennungscode über die Übertragungsstrecke 7 übermittelt wird.

Durch den übertragenen Kennungscode des Preisauszeichnungsschildes 4₂ wird in der Empfangs-/Sendeeinrichtung 2 des Einkaufswagens 3 die das Produkt 5₂ betreffende, produktspezifische Information ausgewählt und mittels der der Empfangs-/Sendeeinrichtung 2 zugeordneten Informationseinrichtung einem Kunden zur Kenntnis gebracht, indem sie beispielsweise auf einem Display angezeigt wird.

Im wesentlichen gleichzeitig mit der Wiedergabe der produktspezifischen Information, mit welcher im vorliegenden Fall das Produkt 5₂ beworben wird, wird die an bzw. in dem elektronischen Preisauszeichnungsschild 4₂ oder die bei bzw. vor der zu bewerbenden Ware 5₂ angeordnete, einen optischen und/oder akkustischen Hinweis abgebende Hinweiseinrichtung 12₂ bzw. 12₂' aktiviert; dadurch ist für einen Kunden eindeutig und schnell erkennbar auf das beworbene Produkt 5₂ hingewiesen.

Die Aktivierung der Hinweiseinrichtung 12₂ bzw. 12'₂, erfolgt beispielsweise unmittelbar durch die Sende-/Empfangseinheit des Preisauszeichnungsschildes 4₂. Alternativ hierzu kann die separat angeordnete Hinweiseinrichtung 12'₂ auch von der am Einkaufswagen 3 angebrachten Empfangs-/Sendeeinrichtung 2 aktiviert werden, was in Fig.2 durch einen strichlierten Pfeil 7' angedeutet ist.

### Bezugszeichenliste

- 1: Sendeeinrichtung
- 2: Empfangs-/Sendeeinrichtung
- 3: Einkaufswagen
- 4₁ bis 4₃: elektronische Preisauszeichnungsschilder
- 5₁ bis 5₃: Produkte
- 6: Regal
- 6₁ bis 6₃: Regalbretter
- 7, 7', 8: Pfeile
- 9: Decke/Zwischendecke des SB-Marktes
- 10: SB-Markt
- 11: Datenverarbeitungseinrichtung
- 12₁ - 12₃: Hinweiseinrichtungen
- 12'₁ - 12'₃: Hinweiseinrichtungen

## Patentansprüche

1. Verfahren zum Versorgen von Kunden eines SB-Marktes mit produktspezifischen Informationen, wobei in dem SB-Markt nur in dessen Eingangsbereich (10) mindestens eine von einer zentralen Datenverarbeitungseinrichtung (11) mit Daten und Informationen versorgte Sendeeinrichtung (1), an Einkaufswagen (3) angebrachte Empfangs-/Sendeeinrichtungen (2) mit jeweils einer Informationseinrichtung und bei Produkten elektronische Preisauszeichnungseinrichtungen (4) mit jeweils einer Sende-/ Empfangseinheit vorgesehen sind und Daten zwischen den Einrichtungen drahtlos übertragen werden, wobei
von der mindestens einen Sendeeinrichtung (1) im Eingangsbereich (10) des SB-Marktes eine Anzahl produktspezifischer Informationen mit Kennungscodes der bei den entsprechenden Produkten vorgesehenen elektronischen Preisauszeichnungseinrichtungen (4) an die Empfangs-/Sendeeinrichtungen (2) der von Kunden mitgeführten Einkaufswagen (3) übertragen und dort gespeichert werden, und
nach Befördern von Einkaufswagen (3) in den Bereich von elektronischen Preisauszeichnungseinrichtungen (4), deren Kennungscode einer der gespeicherten, produktspezifischen Informationen zugeordnet ist, diese produktspezifische Information von der Sende-/Empfangseinheit der jeweiligen Preisauszeichnungseinrichtung (4) jeweils in der Empfangs-/Sendeeinrichtung (2) der in den Bereich dieser Preisauszeichnungseinrichtung (4) beförderten Einkaufswagen (3) aktiviert und mittels deren Informationseinrichtung den Kunden zur Kenntnis gebracht wird.

2. Verfahren nach Anspruch 1, **dadurch gekennzeichnet, daß** während der Wiedergabe einer produktspezifischen Information mittels der Informationseinrichtung des mitgeführten Einkaufswagens (3) eine unmittelbar an oder bei dem entsprechenden Produkt (5) oder in dessen Nähe angeordnete, einen optischen und/oder akustischen Hinweis abgebende Hinweiseinrichtung (12; 12') ausgelöst wird.

3. Verfahren nach Anspruch 2, **dadurch gekennzeichnet, daß** eine Hinweiseinrichtung (12; 12') von der Sende/Empfangseinheit der elektronischen Preisauszeichnungseinrichtung (4) ausgelöst wird, welche die Empfangs-/Sendeeinrichtung (2) der in den Bereich dieser Preisauszeichnungseinrichtung beförderten Einkaufswagen (3) aktiviert hat.

4. Verfahren nach Anspruch 2, **dadurch gekennzeichnet, daß** eine Hinweiseinrichtung (12; 12') jeweils von der aktivierten Empfangs/Sendeeinrichtung (2) der Einkaufswagen (3) ausgelöst wird.

5. Verfahren nach einem der Ansprüche 2 bis 4, **dadurch gekennzeichnet, daß** von einer ausgelösten Hinweiseinrichtung (12; 12') ein Blinken oder kontinuierliches Leuchten der an oder bei dem beworbenen Produkt (5) vorgesehenen Preisauszeichnungseinrichtung (4) erzeugt wird.

6. Verfahren nach Anspruch 1, **dadurch gekennzeichnet, daß** bei Kunden eines SB-Marktes mit einer Kunden-Servicekarte mit individuellem, im SB-Markt vorliegendem Kundenprofil, nachdem sie sich anhand ihrer Kunden-Servicekarte identifiziert haben, im Eingangsbereich (10) des SB-Marktes von der mindestens einen Sendeeinrichtung (1) nur die produktspezifischen Informationen, die zu dem individuellen Kundenprofil passen, an die Empfangs-/Sendeeinrichtung (2) des jeweils mitgeführten Einkaufswagens (3) übertragen und dort gespeichert werden.

7. Verfahren nach Anspruch 6, **dadurch gekennzeichnet, daß** bei solchen Kunden an der Kasse des SB-Marktes die gerade bezahlten Produkte erfaßt, an die zentrale Datenverarbeitungseinrichtung (11) übermittelt und hinsichtlich des jeweiligen individuellen Kundenprofils analysiert werden und bei Feststellen von Veränderungen das Kundenprofil entsprechend aktualisiert wird.

8. Verfahren nach Anspruch 1, **dadurch gekennzeichnet, daß** eine einwandfreie Wiedergabe einer produktspezifischen Informaton mittels der Informationseinrichtung der vom Kunden mitgeführten Einkaufswagen (3) in dessen Empfangs-/Sendeeinrichtung (2) registriert wird und/oder von dieser Empfangs-/Sendeeinrichtung (2) gegenüber der Sende-/Empfangseinheit der dem entsprechenden Produkt (5) zugeordneten Preisauszeichnungseinrichtung (4) bestätigt und dort registriert wird.
